(19) Europäisches Patentamt / European Patent Office / Office européen des brevets

(11) **EP 4 783 256 A1**

(12) **EUROPEAN PATENT APPLICATION**
published in accordance with Art. 153(4) EPC

(43) Date of publication:
**29.07.2026 Bulletin 2026/31**

(21) Application number: **24868582.8**

(22) Date of filing: **11.09.2024**

(51) International Patent Classification (IPC):
$H01M\ 4/36$ (2006.01)    $H01M\ 4/38$ (2006.01)
$H01M\ 4/583$ (2010.01)    $H01M\ 4/134$ (2010.01)
$H01M\ 10/052$ (2010.01)    $H01M\ 4/02$ (2006.01)

(52) Cooperative Patent Classification (CPC):
H01M 4/02; H01M 4/134; H01M 4/36; H01M 4/38;
H01M 4/583; H01M 10/052; Y02E 60/10

(86) International application number:
**PCT/KR2024/013807**

(87) International publication number:
**WO 2025/063604 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023 KR 20230125366
10.09.2024 KR 20240123446**

(71) Applicant: POSCO Silicon Solution Co., Ltd
**Pohang-si Gyeongsangbuk-do 37948 (KR)**

(72) Inventors:
• **CHOI, Sun-Ho**
  **Pohang-si Gyeongsangbuk-do 37948 (KR)**
• **LEE, Jae-Woo**
  **Pohang-si Gyeongsangbuk-do 37948 (KR)**
• **CHO, Moon-Kyu**
  **Pohang-si Gyeongsangbuk-do 37948 (KR)**
• **CHEON, Jung-Hoon**
  **Pohang-si Gyeongsangbuk-do 37948 (KR)**

(74) Representative: **Lorenz Seidler Gossel Part. mbB
Widenmayerstr. 23
80538 München (DE)**

(54) **NEGATIVE ELECTRODE MATERIAL FOR SECONDARY BATTERY**

(57) A negative electrode material for a secondary battery, according to one embodiment of the present invention, is particles comprising: a base material containing silicon (Si) on the basis of an element component; and a surface layer which is positioned on the base material and which contains carbon (C), and has a angularity ratio AR, defined as $(1-Con)/Con\cdot100$, of 1.00 or less, wherein Con is the convexity obtained by dividing a convex perimeter of the negative electrode material particle by the actual perimeter of the negative electrode material.

FIG.3

**Description**

Technical Field

The disclosure relates to a negative electrode material for a secondary battery and, specifically, to a silicon-based negative electrode material for a lithium secondary battery.

Background Art

There is an increasing demand for secondary batteries with long lifespans, high energy density, and high power density in various industrial fields, including electronic devices, electric/hybrid vehicles, and aerospace/drone applications.

Graphite is a representative negative electrode material that is commercially available, but the theoretical maximum capacity of graphite is only 372 mAh/g. Hence, in order to realize secondary batteries with high energy density, studies have been continuously conducted on the use of, as negative electrode materials for secondary batteries, chalcogen-based materials such as sulfur (maximum capacity: 1675 mAh/g), silicon-based materials, such as silicon (maximum capacity: 4200 mAh/g) or silicon oxide (maximum capacity: 1500 mAh/g), and transition metal oxides. Of the various materials, silicon-based negative electrode materials have been receiving the most attention.

However, silicon-based negative electrode materials undergo large volume changes during repeated charge/-discharge cycling, resulting in rapid deterioration of battery performance due to electrical isolation, particle detachment, and increased contact resistance. Moreover, lithium is lost due to the formation of irreversible products, such as lithium silicate and lithium oxide, causing a sharp decrease in the initial charge/discharge efficiency.

In order to address these issues of silicon-based negative electrode materials, techniques have been proposed including nanostructuring silicon in the form of wires or the like and compositing the same with carbon materials, doping silicon oxide with heterogeneous metals to form composite oxide phases, or pre-lithiating silicon oxide.

However, with respect to silicon-based negative electrode materials, technical development has mainly focused on nanostructuring, compositing, and composition control, but there has been little research on the effect of the morphology itself of silicon-based negative electrode materials on their properties.

Disclosure of Invention

Technical Problem

An aspect of the disclosure is to provide a negative electrode material for a secondary battery having improved capacity retention.

An aspect of the disclosure is not limited to the foregoing. A person having ordinary skill in the art to which the disclosure pertains will have no difficulty in understanding additional aspects of the disclosure from the entire description of the present specification.

Solution to Problem

A negative electrode material for a secondary battery according to an embodiment of the disclosure has a particulate form comprising, based on element components: a base material containing silicon (Si); and a surface layer disposed on the base material and containing carbon (C), wherein the negative electrode material has an angularity ratio (AR) of 1.00 or less, as calculated by Equation 1.

$$(\text{Equation 1})$$

$$AR = \frac{(1-Con)}{Con} \times 100$$

In Equation 1, AR denotes the angularity ratio, and Con denotes the convexity obtained by dividing the convex perimeter of negative electrode material particles by the actual perimeter of the negative electrode particles.

In an embodiment, the angularity ratio may be 0.55 or less.

In an embodiment, the negative electrode material may satisfy at least one of I) and II) below.

I) the standard deviation value of the convexity $\leq 0.050$

II) the proportion of particles having a convexity within the range of $0.9 \times Con$ or more being 90% or more.

In an embodiment, the negative electrode material may have a sphericity of 0.55 or more.

In an embodiment, the negative electrode material may have an angular shape.

In an embodiment, the negative electrode material may have a mean particle diameter ($D_{50}$) of 1 to 30 $\mu$m.

In an embodiment, the surface layer may include an amorphous carbon layer.

In an embodiment, the surface layer may have a thickness of 1 to 50 nm.

A negative electrode material for a secondary battery according to another aspect of the disclosure is a particulate silicon-based negative electrode, wherein the negative electrode material satisfies Equation 2 upon charge/-discharge testing using a half-cell with a metallic lithium foil as a counter electrode under the following charge/discharge cycle conditions.

charge/discharge cycle conditions: CC/CV, a cut-off voltage of 0.005 to 1.000 V, and a 0.5 C-rate.

$$(\text{Equation 2})$$

$$95\% < C_j/C_1*100$$

In Equation 2, $C_1$ denotes the discharge capacity (mAh/g) at the first charge/discharge cycle, and $C_j$ denotes the discharge capacity at the j-th charge/discharge cycle where j is an arbitrary natural number of 10 to 80.

In an embodiment of the foregoing negative electrode material for a secondary battery, the base material may include silicon, silicon oxide, silicon nitride, silicon sulfide, silicon carbide, a silicon alloy, a mixture thereof, or a composite thereof.

In an embodiment of the foregoing negative electrode material for a secondary battery, the base material may further contain at least one doping element (D) selected from the group of alkali metals, alkaline earth metals, and post-transition metals.

In an embodiment of the foregoing negative electrode material for a secondary battery, the base material may include, based on element components: a matrix containing silicon (Si), a dopant element (D), and oxygen (O); and silicon nanoparticles dispersed and incorporated in the matrix.

A negative electrode for a secondary battery according to an embodiment of the disclosure contains the foregoing negative electrode material for a secondary battery.

A secondary battery according to an embodiment of the disclosure includes the foregoing negative electrode.

Advantageous Effects of Invention

The negative electrode material according to the disclosure is a particulate negative electrode material including a silicon-based base material and a carbon surface layer and can have improved electrochemical properties due to the morphology thereof.

Various and advantageous features and effects of the disclosure are not limited to the foregoing description and could be more readily understood in the description of specific embodiments of the disclosure.

Brief Description of Drawings

FIG. 1 is a scanning electron microscope photograph showing a negative electrode material prepared in an example.
FIG. 2 is a transmission electron microscope photograph showing a surface layer of the negative electrode material prepared in the example.
FIG. 3 illustrates the capacity retention rate depending on the charge/discharge cycle in negative electrode materials prepared in examples and a comparative example.

Mode for Carrying out the Invention

Hereinafter, preferred embodiments of the disclosure will be described with reference to the accompanying drawings. However, the embodiments of the disclosure may be modified in many different forms, and the scope of the disclosure is not limited to the embodiments described below.

The embodiments of the disclosure are provided to illustrate the disclosure more completely to those skilled in the art.

In the description of the embodiments of the disclosure, when it is determined that a detailed description of a known art related to the disclosure may unnecessarily obscure the subject matter of the disclosure, the detailed description will be omitted. The terminology used hereinafter is terms defined by considering a function in exemplary embodiments of the disclosure, and their meaning may be changed according to intentions of a user and an operator, customs, or the like.

Accordingly, the terminology will be defined based on the contents throughout this specification. The terminology used in the detailed description of the disclosure is provided only to describe embodiments of the disclosure and not for purposes of limitation. Unless the context clearly indicates otherwise, the singular forms include the plural forms.

It should be understood that the terms "comprise", "include", "contain", or the like specify some features, numbers, steps, operations, elements, or some or combinations thereof when used herein, but do not preclude the presence or possibility of one or more other features, numbers, steps, operations, elements, or some or combinations thereof in addition to the description.

Unless otherwise specifically stated in the specification, % refers to weight%.

Throughout the specification, when it is described that a certain part is "connected" to another part, this includes not only a direct connection but also an indirect connection with one or more other elements interposed therebetween.

The disclosure will now be described in detail with reference to the various embodiments and examples. It should be noted that each embodiment or example described herein is not limited to a single embodiment or example, and may be combined with other embodiments or examples. Therefore, references to the claims are merely an example in connection with an embodiment, and should not be construed as being limited to combinations with the claims reciting the technical idea of the disclosure, and various combinations with other claims are also included within the scope of the technical idea of the disclosure.

The present applicant confirmed that in particulate silicon-based negative electrode materials, the electrochemical properties of the negative electrode materials were highly sensitive to and significantly influenced by the particulate morphology, particularly, by the convexity itself. As a result of further studies based on this, the morphology capable of significantly improving electrochemical properties of negative electrode materials are established, thus completing the disclosure.

A negative electrode material for a secondary battery according to an aspect (aspect I) of the disclosure has a particulate form comprising, based on element components: a base material containing silicon (Si); and a surface layer disposed on the base material and containing carbon

(C), wherein the negative electrode material has an angularity ratio (AR) of 1.00 or less, as calculated by Equation 1.

$$\text{(Equation 1)}$$

$$AR = \frac{(1-Con)}{Con} \times 100$$

In Equation 1, AR denotes the angularity ratio, and Con denotes the convexity, which is a ratio ($L_{CP}/L_P$) of the convex perimeter ($L_{CP}$) of negative electrode material particles divided by the actual perimeter ($L_P$) of the negative electrode particles.

As is known, the convex perimeter is defined as the length of an imaginary elastic band, assuming that the contour of a three-dimensional particle to be measured is surrounded by the band on a captured 2D image of the particle, whereas the actual perimeter refers to the length of the real perimeter of the particle in the captured 2D image. Especially, the captured image used to calculate the convex perimeter may, of course, be the same as the captured image used to calculate the actual perimeter.

The convexity value may be a real number of 0 to 1, wherein a value closer to 0 indicates having a particle contour with more protrusions and/or a greater step difference in the protrusions. The angularity ratio is defined by the convexity according to Equation 1 and indicates the ratio of the difference between the actual perimeter and the convex perimeter relative to the convex perimeter in the particulate negative electrode material. Therefore, the closer the actual perimeter is to the convex perimeter, the closer the angularity ratio is to 0, whereas a larger difference between the actual perimeter and the convex perimeter results in a higher angularity ratio.

The convexity (including the mean and distribution) of the particulate negative electrode material may differ from the convexity (including the mean and distribution) of a base material itself, and even with the same convexity in the base material, the negative electrode material may exhibit a wide range of convexities (see comparative example and examples to be described below). Especially, the convexity of the base material itself indicates the mean convexity of a powder-phase material used as the base material before the formation of a surface layer.

The negative electrode material may be a collection of particulate forms (hereinafter also collectively referred to simply as "particles") including a base material and a surface layer.

The collection of particles may indicate a "population" of particles, where the "population" has a size such that the electrochemical properties of the collection are not significantly changed by the number of particles constituting the population. In terms of implementing uniform and stable electrochemical properties, the collection of particles may indicate a particle population with a weight of at least 1 g, specifically at least 10 g, more specifically at least 50 g, and still more specifically at least 100 g.

Otherwise defined in terms of experimental aspects, the collection of particles may indicate the "population" of particles, where the "population" of particles may indicate a particle population that has a size sufficient to obtain reliable measurement values (mean sizes, convexity values, etc.), in other words, a size such that the measurement values are not significantly changed by the number of particles constituting the "population".

The convexity value (Con in Equation 1) may be a statistical mean obtained by securing the convexity of each of at least 100 particles, generally at least 500 particles, and substantially at least 1,000 particles, and averaging the secured convexity values.

Experimentally, the convexity can be measured using commercially available instruments that are commonly used for convexity measurements. An example of the commercially available instrument is Morphologi 4 from Malvern Panalytical.

The negative electrode material for a secondary battery has an angularity ratio of 1.00 or less. A negative electrode material exhibiting an angularity ratio of 1.00 or less can exhibit excellent electrochemical properties, specifically, superior capacity retention.

It was confirmed through preliminary experiments that even negative electrode materials having substantially the same composition and substantially the same microstructure exhibit significantly changed capacity retention by only a small change in angularity ratio value.

For example, even when negative electrode materials have substantially the same composition and substantially the same microstructure and exhibit angularity ratios of about 0.8 and about 1.2, respectively, the difference in the angularity ratio being only 0.4, the negative electrode material having an angularity ratio of about 1.2 exhibits poor electrochemical properties, with a discharge capacity retention rate of less than 50% at the 100th charge/discharge cycle. However, the negative electrode material having an improved angularity ratio of about 0.8 exhibits improved electrochemical properties, with a discharge capacity retention rate of 80% or more at the 100th charge/discharge cycle.

As described above, the angularity ratio of the negative electrode material may be 1.00 or less, specifically, 0.90 or less, 0.80 or less, 0.70 or less, 0.65 or less, 0.60 or less, 0.55 or less, 0.50 or less, 0.45 or less, 0.40 or less, or 0.35 or less. The angularity ratio of the negative electrode material may be substantially 0.10 or more, more substantially 0.15 or more, and still more substantially 0.20 or more.

In an advantageous example, the angularity ratio of the negative electrode material may be 0.55 or less. A negative electrode material having an angularity ratio of 0.55 or less can exhibit a discharge capacity retention rate of 95% or more at the 50th charge/discharge cycle.

In a more advantageous example, the angularity ratio of the negative electrode material may be 0.35 or less. A negative electrode material having an angularity ratio of 0.35 or less can exhibit a discharge capacity retention rate of 95% or more, specifically, 98% or more, more specifically 100% or more, and still more specifically exceeding 100% at the 100th charge/discharge cycle.

In an embodiment, the negative electrode material may satisfy at least one of Conditions I) and II) below. The following Conditions I) and II) are associated with the convexity distribution of the negative electrode material. The convexity distribution may correspond to a distribution in which the convexity is taken as a variable (x-axis) and the proportion (%) of particles having the corresponding convexity among all particles is represented on the y-axis.

Condition I) the standard deviation value of the convexity $\leq 0.050$

Condition II) the proportion of particles having a convexity within the range of 0.90 x convexity (Con) or more being 90% or more

The standard deviation value of the convexity (Con) may be 0.050 or less. When the standard deviation of the convexity is small as described above, the fraction of particles having a low convexity decreases, and a significant influence by particles having a low convexity may be excluded.

In terms of preventing adverse effects by particles having a small convexity (high angularity ratio), the standard deviation value of the convexity (Con) may be 0.050 or less, 0.040 or less, 0.035 or less, 0.030 or less, 0.025 or less, 0.020 or less, or 0.015 or less. The standard deviation value of the convexity may be substantially 0.001 or more, or 0.005 or more, but is not limited thereto.

Condition II) is also for preventing the adverse effects by particles having a small convexity. In a case where Condition II) is satisfied, even if particles having a small convexity are present, the particles having a small convexity can be prevented from exerting a significant influence on the overall electrochemical properties of the negative electrode material.

Specifically, the proportion of particles having a convexity within the range of 0.90 x convexity (Con) or more, more specifically, 0.91 x convexity (Con) or more, 0.92 x convexity (Con) or more, 0.93 x convexity (Con) or more, 0.94 x convexity (Con) or more, 0.95 x convexity (Con) or more, 0.96 x convexity (Con) or more, or 0.97 x convexity (Con) or more may be 90% or more.

The negative electrode material may satisfy Condition 1), Condition II), or both of Conditions I) and II).

Furthermore, in a case where a negative electrode material having an angularity ratio of 0.55 or less satisfies Condition I) and/or Condition II), the discharge capacity retention can be improved so that the discharge capacity at the 50th charge/discharge cycle may be greater than the discharge capacity (C1) at the first charge/discharge cycle, and along with this, or independently thereof, the discharge capacity at the 20th charge/discharge cycle may be greater than the discharge capacity (C1) at the first charge/discharge cycle.

Additionally, in a case where a negative electrode material having an angularity ratio of 0.35 or less satisfies at least Condition I) and/or Condition II), the discharge capacity in the 10th to 80th charge/discharge cycle range (entire range) may be greater than the discharge capacity (C1) at the first charge/discharge cycle.

Due to the morphology based on the angularity ratio, the negative electrode material can exhibit remarkably improved charge/discharge cycle characteristics.

In terms of electrochemical properties, a negative electrode material for a secondary battery according to another aspect (Aspect II) of the disclosure is a particulate silicon-based negative electrode material, wherein the negative electrode material satisfies Equation 2 upon charge/discharge testing using a half-cell with a metallic lithium foil as a counter electrode under the following charge/discharge cycle conditions. Especially, the particulate silicon-based negative electrode material may indicate a particulate form comprising, based on element components: a base material containing silicon (Si); and a surface layer disposed on the base material and containing carbon (C).

charge/discharge cycle conditions: CC/CV, a cut-off voltage of 0.005 to 1.000 V, a 0.05 C-rate

$$(\text{Equation 2})$$
$$95\ \%\ <\ C_j/C_1*100$$

In Equation 2, C1 denotes the discharge capacity (mAh/g) at the first charge/discharge cycle, and Cj denotes the discharge capacity at the j-th charge/discharge cycle where j is an arbitrary natural number of 10 to 80. Since j is any natural number of 10 to 80, Equation 2 indicates that the discharge capacity in the 10th to 80th charge/discharge cycle range is 95% or more of the initial discharge capacity C1.

Specifically, j is any natural number of 10 to 90 and, more specifically, j is any natural number of 10 to 100. This indicates that the discharge capacity in the 10th to the 90th, more specifically the 10th to the 100th charge/discharge cycle region may be 95% or more of the initial discharge capacity C1. More specifically, Cj/C1*100 may be 98% or more, more specifically, Cj/C1*100 may be 100% or more, substantially 120% or less, and still more specifically, 110% or less.

The half-cell for examining the electrochemical properties of the negative electrode material may be a half-cell undergoing a formation process. The half-cell may include: a negative electrode including a negative electrode current collector and a negative electrode active material layer disposed on at least one surface of the current collector and containing the negative electrode material according to an embodiment; a counter electrode, which is a metallic lithium foil; a separator interposed between the negative electrode and the counter electrode; and an electrolyte in which 1 M LiPF$_6$ is dissolved in a mixed solvent containing ethylene carbonate and diethyl carbonate mixed at a volume ratio of 1:1. The electrochemical properties of the half-cell may be measured at room temperature. The formation process may encompass: a primary process in which charging/discharging are performed under conditions of CC/CV, a cut-off voltage of 0.005 V to 1.500 V, and a 0.1 C-rate; and a secondary process in which charging/discharging are performed under conditions of CC/CV, a cut-off voltage of 0.005V to 1.000 V, and a 0.1 C-rate. However, the disclosure is not limited by the formation process conditions of the test cell (half-cell), and any formation process commonly performed in cells used for testing the electrochemical properties of conventional negative electrode materials may be employed. More detailed configurations and measurement conditions of the half-cell follow the examples.

Hereinafter, unless otherwise specified by limiting a particular aspect, the description below applies to all the foregoing aspects.

In an embodiment, the negative electrode material may be a particle having a shape with edges, that is, an angular shape. In such angular particles, electrochemical properties of the particles may sensitively change depending on the angularity ratio.

The angular shape may be a shape in which at least two surfaces contact each other to form an edge when observing the shape of the negative electrode material through a scanning electron microscope. The two surfaces forming the edge may be independently flat surfaces or curved surfaces. Although not particularly limited, in the angular shape, at least one of the two surfaces forming the edge within the particle may be a curved surface. The curved surface may be concave, convex, or a surface having both concave and convex regions. In addition, the curved surface may have fine irregularities, such as a hill and valley structure or a step structure, and the convexity of the surface may be formed by such fine irregularities. The other of the two surfaces forming the edge may be a curved surface or a flat surface. Upon observation of the shape of the negative electrode material, the magnification of the scanning electron microscope may be about 3,000x to 8,000x, but is not limited thereto.

In terms of preparation methods, the angular particles may be obtained by crushing, and at least one of the two surfaces forming the edge may be a fracture surface.

Even though the angularity ratio of an angular shape and the angularity ratio of a non-angular shape have the same value, the influences thereof on electrochemical properties may be different. As an example, when forming a negative electrode active material layer using the negative electrode material, the morphological difference between a spherical shape and an angular shape leads to differences in space-filling structures, degrees of contact with adjacent elements, and surface areas relative to the same volume, even though the particles have the same angularity ratio.

In order to significantly improve the electrochemical properties through the above-described angularity ratio, the angularity ratio may be the angularity ratio of particles having an angular shape.

In an embodiment, the mean particle diameter ($D_{50}$) of the negative electrode material may be 1 $\mu$m to 30 $\mu$m. The mean particle diameter may correspond to a median diameter ($D_{50}$) based on cumulative volume. The $D_{50}$ based on cumulative volume refers to a particle diameter value at a position where the cumulative volume% is 50 volume% in a distribution curve (cumulative distribution curve) accumulated in the order of particle diameters. Experimentally, the cumulative distribution curve including $D_{50}$ may be obtained by a common particle size analyzer using laser diffraction or dynamic light scattering.

The $D_{50}$ of the negative electrode material may be 1 $\mu$m to 30 $\mu$m, specifically 2 $\mu$m to 20 $\mu$m, 2 $\mu$m to 15 $\mu$m, 2 $\mu$m to 10 $\mu$m, or 3 $\mu$m to 8 $\mu$m. When the negative electrode material having the aforementioned angularity ratio has such a $D_{50}$ value, stable electrical conductivity is secured upon the formation of the negative electrode active material layer, while the diffusion time of metal ions (e.g., lithium ions) involved in charging/discharging is reduced, leading to further improved and stable charge/discharge cycle characteristics.

In an embodiment, the negative electrode material may be a primary particle, a secondary particle, or a mixture thereof. That is, the negative electrode material may be primary particles, secondary particles, or particles in which primary particles and secondary particles are mixed. The primary particle may indicate a single particle, and the secondary particle may indicate an aggregate in which two or more particles are aggregated. Both the case where two or more base materials forming an aggregate are in direct contact with each other while forming an interface and the case where a carbon component of a surface layer is present between two or more base materials forming an aggregate as described below may be classified as aggregates.

In an embodiment, the sphericity of the negative electrode material may be 0.55 or more, specifically 0.55 to 0.95, more specifically 0.70 to 0.93, and even more specifically 0.80 to 0.90. The sphericity may be defined, based on a projected image (2D image) of the negative electrode material which is a three-dimensional particle, as a ratio of the circumference of a circle having the same area as the projected image to the perimeter (perimeter length) of the projected image. A negative electrode material having a high sphericity is advantageous for high densification, enables stable and homogeneous contact with an electrolyte, and can prevent the local concentration of stress caused by volume changes accompanying battery charge/discharge reactions, and exhibit improved durability.

In an embodiment, a surface layer containing carbon (C) may be disposed on the base material, and the surface layer may cover a part or the entirety of the surface of the base material. Substantially, the surface layer may completely surround the base material so that the surface of the base material is not exposed as a surface of the negative electrode material (particle). Specifically, the surface layer may surround one or more base materials. When the surface layer surrounds one base material, the particle may be considered to be a primary particle, and when the surface layer surrounds two or more base materials, the particle may be considered to be a secondary particle.

The surface layer containing carbon may include a carbon layer. The base material may be surrounded by the carbon layer, wherein the base material and the carbon layer may be in contact with each other. The carbon layer may include an amorphous carbon layer, a crystalline carbon layer, or a composite layer in which amorphous carbon and crystalline carbon are mixed. The surface layer may include a single carbon layer or a carbon multilayer having a multi-layered structure in which carbon layers having different physical properties are stacked.

In an embodiment, the carbon layer may be an amorphous carbon layer. In terms of stably surrounding the surface of the base material while minimizing a resistance component by the amorphous carbon layer, the thickness of the amorphous carbon layer may be about 1 to 50 nm, specifically about 1 to 40 nm, and more specifically about 4 to 30 nm. Experimentally, the thickness of the amorphous carbon layer may be determined by measuring the thicknesses of the carbon layer at 10 or more random sites, substantially 10 to 20 sites on an image obtained through a microstructure observation device, such as a transmission electron microscope (TEM) or a scanning transmission electron microscope (STEM), and taking the mean value of the thicknesses.

In an embodiment, the surface layer may be derived from a liquid (room-temperature liquid) carbon precursor. Specifically, the surface layer may be derived from a liquid carbon precursor having a surface tension of 20 to 60 dyne/cm, specifically 25 to 50 dyne/cm. A liquid having such a surface tension is advantageous in that the base material can be surrounded by using surface energy reduction as a driving force. As described above, the liquid carbon precursor and the particulate base material are mixed to form the surface layer on the base material, so that a surface layer completely surrounding the base material can be easily formed. Additionally, upon heat treatment for carbonization, the convexity of the negative electrode material may be controlled through the density of the mixture containing the liquid carbon precursor and the base material.

Examples of the liquid carbon precursor having a surface tension of 20 to 60 dyne/cm may include coal tar, petroleum-based pyrolyzed fuel oil (PFO), and the like, and may be substantially coal tar. However, the liquid carbon precursor is not limited to a liquid carbon precursor having a surface tension of 20 to 60 dyne/cm, and any liquid material commonly used to form a carbon surface layer on a conventional silicon-based negative electrode active material may be used.

The content of the surface layer contained in the negative electrode material may be 0.10 to 3.00 wt%, specifically 0.15 to 2.00 wt%, and more specifically 0.15 to 1.70 wt%, relative to the total weight of the negative electrode material.

In an embodiment, the base material may be, based on element components, a base material containing silicon, or otherwise stated, a silicon-based base material.

The silicon-based base material may include silicon, silicon oxide, composite oxide between silicon and a heterogeneous element (also commonly referred to as silicon composite oxide), silicon nitride, silicon sulfide, silicon carbide, a silicon alloy, a mixture thereof, or a composite thereof. Specific examples of the composite may include a composite between silicon and silicon oxide, a composite among silicon, silicon oxide, and silicon composite oxide, a composite between silicon carbide and silicon, and the like. The silicon alloy may include an alloy (including an intermetallic compound) between silicon and a heterogeneous metal (e.g., at least one selected from the group of Ti, V, Cr, Mn, Fe, Co, Ni, Cu, Zr, Nb, and Mg). The silicon composite oxide, which is a composite oxide between silicon and a heterogeneous element, may include a composite oxide between silicon and at least one metal selected from the group of alkali metals, alkaline earth metals, and post-transition metals. Especially, when the silicon-based base material is a composite, the base material should not be construed as being limited only to a composite of materials necessarily containing silicon. As an example, when the base material is a composite, the composite may include a silicon-carbon composite, and the silicon-carbon composite may include a composite between a metallic silicon and at least one carbon component selected from the group of carbon nanostructures including graphitic carbon, non-graphitic carbon, graphene, carbon nanotubes, and the like.

In an embodiment, the base material (silicon-based base material) may contain, based on elemental components, silicon, oxygen, and at least one doping element (D) selected from the group of alkali metals, alkaline earth metals, and post-transition metals. The silicon may include a silicon component in an elemental silicon state and a silicon component in an oxide state, and the silicon component in the oxide state may include an oxide state of silicon alone, a composite oxide state of silicon and a doping element, or both thereof. The doping element may include a doping element component in an oxide state, and the doping element in the oxide state may include an oxide state of the doping element alone, a composite oxide state of silicon and the doping element, or both thereof.

Based on compound components, the base material (silicon-based base material) may contain silicon oxide, a composite oxide of a doping element and silicon, or a mixture thereof, and may also contain elemental (metallic) silicon (Si).

The silicon oxide may satisfy $SiO_x$ (x is a real number of 0.1 to 2, specifically, a real number of 0.5 to 2), and may include a first silicon oxide and a second silicon oxide having different x values. As an example, the silicon oxide contained in the base material may include a first silicon oxide of $SiO_{x1}$ (x1 is a real number of 1.8 to 2) and a second silicon oxide of $SiO_{x2}$ (x2 is a real number of 0.8 to 1.2).

The composite oxide may satisfy $D_l Si_m O_n$ (D is a doping element, l is a real number of 1 to 6, m is a real number of 0.5 to 2, and n is a real number satisfying charge neutrality according to the oxidation numbers of each of D and Si, and l and m).

The doping element (D) may be at least one selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi). Therefore, the composite oxide may be an oxide between silicon (Si) and at least one element selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi). Specifically, the doping element may be at least one element selected from the group of alkali metals and alkaline earth metals, more specifically, from lithium (Li), sodium (Na), potassium (K), rubidium (Rb), cesium (Cs), beryllium (Be), magnesium (Mg), calcium (Ca), strontium (Sr), and barium (Ba), and still more specifically, from magnesium (Mg), calcium (Ca), strontium (Sr), and barium (Ba). As a similar example, when D is Mg, the composite oxide may include at least one oxide selected from $MgSiO_3$ and $Mg_2SiO_4$, but in the disclosure, the doping element and the composite oxide are not necessarily limited to Mg and Mg-Si oxides.

Based on the microstructure, the base material (silicon-based base material) may contain: a matrix containing silicon oxide, a composite oxide of silicon and at least one doping element selected from the group of alkali metals, alkaline earth metals, and post-transition metals, or a mixture thereof; and a dispersed phase containing silicon nanoparticles. The dispersed phase may be uniformly dispersed and incorporated within the matrix. The matrix may refer to a solid-phase medium in which nanoparticulate silicon is dispersed, in the base material, and may indicate material(s) excluding metallic silicon (Si), which is the dispersed phase.

In an embodiment, the matrix may contain both silicon oxide and the composite oxide, and when the parts by weight of the composite oxide relative to 100 parts by weight of silicon oxide in the matrix is denoted as A, and the concentration of the doping element in wt% in the negative electrode material is denoted as B, A/B may satisfy 2 to 50, 2 to 40, 2 to 30, or 2 to 20.

In an embodiment, the silicon nanoparticles may be crystalline, amorphous, or a composite phase in which crystalline and amorphous phases are mixed, and may be substantially crystalline. The mean diameter of the silicon nanoparticles may be on the order of 100 nm to $10^1$ nm, specifically 1 to 50 nm, 2 to 40 nm, 2 to 35 nm, 2 to 30 nm, 2 to 20 nm, or 2 to 15 nm, but is not limited thereto.

In an embodiment, the matrix may be crystalline, amorphous, or a composite phase in which crystalline and amorphous phases are mixed. In detail, the matrix may be crystalline or a composite phase in which crystalline and amorphous phases are mixed. Specifically, the matrix may include silicon oxide in an amorphous phase, a crystalline phase, or a mixture of amorphous and crystalline phases, and crystalline composite oxide.

In an embodiment, the base material (silicon-based base material) may contain 15 to 50 wt% of nanoparticulate silicon and the balance being the matrix.

In an embodiment, the negative electrode material may be a negative electrode material for a secondary battery, and specifically, the secondary battery may include a lithium secondary battery. The lithium secondary battery may be a lithium-ion battery, a lithium-ion polymer battery, or a lithium polymer battery according to the types of separator and electrolyte, and may be in a cylindrical, angular, coin, or pouch type according to the shape, but is not limited thereto.

However, the negative electrode material according to an embodiment of the disclosure is not necessarily limited to a negative electrode material for a lithium secondary battery. The negative electrode material according to an embodiment may be utilized as an active material for secondary batteries, such as sodium batteries, aluminum batteries, magnesium batteries, calcium batteries, and zinc batteries, and may also be utilized in other energy storage/generation devices using conventional silicon-based materials, such as supercapacitors, dye-sensitized solar cells, and fuel cells.

The disclosure encompasses a method for preparing a negative electrode material for a secondary battery. In the description of the preparation method, the prepared negative electrode material is similar to or the same as the foregoing negative electrode material for a secondary battery. Therefore, the method for preparing a negative electrode material for a secondary battery encompasses all of the features described in the negative electrode material.

A method for preparing a negative electrode material for a secondary battery according to an embodiment includes: heating a raw material, in which silicon (Si) and silicon oxide ($SiO_2$) are mixed, to a temperature of 1350 to 1750°C under a vacuum of 0.1 Torr or less to vaporize the raw material, followed by condensation (condensation of vaporized gas) on a collection plate at 350 to 450°C, thereby obtaining a collected product; heat-treating the obtained collected product under an inert atmosphere at a temperature of 850 to 950°C, specifically 880 to 920°C, for 10 to 20 hours, specifically 13 to 18 hours, to obtain a heat-treated product; pulverizing the obtained heat-treated product to obtain a pulverized product; and carbonizing a mixture of the pulverized product and a carbon precursor under a density (packing density) of 0.70 g/cm$^3$ or less in an inert atmosphere at a temperature of 850 to 950°C, specifically 880 to 920°C, for 1 to 5 hours, specifically 1 to 3 hours, to prepare the negative electrode material. In such a case, a particulate negative electrode material that includes, based on element components, a base material containing silicon (Si) and a surface layer located on the base material and containing carbon (C), and has an angularity ratio of 1.00 or less as calculated by the foregoing Equation 1 may be prepared by the carbonization.

The raw material may further contain an oxide of the doping element (D) together with silicon and silicon oxide. In the oxide of the doping element, the doping element may be similar to or the same as those described with respect to the foregoing negative electrode material. Specifically, the oxide of the doping element may be an oxide of at least one doping element selected from the group of alkali metals, alkaline earth metals, and post-transition metals, and more specifically, an oxide of at least one doping element selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi).

The molar ratio of silicon to silicon oxide contained in the raw material may be 1:0.60-0.90, and more specifically 1:0.70-0.80. When the raw material is a mixture of silicon, silicon oxide, and an oxide of a doping element, the molar ratio of silicon to the oxide of the doping element contained in the raw material may be 1:0.10-0.40, and more specifically 1:0.15-0.30, but is not necessarily limited thereto.

After vaporization and collection of the raw material, the heat-treated product obtained by heat-treating the collected product may be mechanically pulverized. The obtained heat-treated product may be granulated into particles having a mean size of about 1 μm to 30 μm by pulverization.

The pulverized product may be mixed with a carbon precursor, followed by carbonization. The carbon precursor may be a liquid carbon precursor, which is liquid at room temperature, and advantageously, may be a liquid carbon precursor having a surface tension of 20 to 60 dyne/cm. In an embodiment, the carbon precursor may be coal tar, petroleum-based pyrolyzed fuel oil (PFO), or the like, but is not necessarily limited thereto.

Upon carbonization, a mixture of the pulverized product and the carbon precursor, advantageously the pulverized product and the liquid carbon precursor, may be carbonized under an inert atmosphere in a state of satisfying a density (packing density) condition of 0.70 g/cm$^3$ or less. Specifically, the mixture of the pulverized product and the liquid carbon precursor may be carbonized under an inert atmosphere in a state of satisfying a packing density of 0.40 to 0.70 g/cc, advantageously 0.45 to 0.70 g/cc, more advantageously 0.45 to 0.60 g/cc, and even more advantageously 0.50 to 0.60 g/cc. Specifically, the inert atmosphere may be argon, nitrogen, helium, neon, or a mixed gas thereof.

The disclosure includes a negative electrode containing the foregoing negative electrode material.

The disclosure includes a negative electrode containing the negative electrode material obtained by the foregoing preparation method.

Specifically, the negative electrode may be a negative electrode for a secondary battery, specifically a negative electrode for a lithium secondary battery. The negative electrode may include: a current collector; and a negative electrode active material layer located on at least one surface of the current collector and containing the foregoing negative electrode material, and the negative electrode active material layer may further include, if necessary, a binder and a conductive material that are commonly used in a secondary battery negative electrode, together with the foregoing negative electrode material, and may further include, if necessary, a non-silicon-based negative electrode active material (graphite as an example for a lithium secondary battery).

The disclosure includes a secondary battery including the foregoing negative electrode. The secondary battery may include: a positive electrode including a positive electrode current collector and a positive electrode active material layer located on at least one surface of the positive electrode current collector; the foregoing negative electrode; a separator interposed between the positive electrode and the negative electrode; and an electrolyte conducting active ions (for example, lithium ions) involved in charging and discharging of the battery. The positive electrode current collector, the negative electrode current collector, the positive electrode active material or composition of the positive electrode active material layer, the separator, and the solvent, electrolyte salt, or concentration of the electrolyte salt in the electrolyte may be any material or composition that is commonly adopted in a corresponding secondary battery for each specific secondary battery.

The disclosure includes a power supply source for generating power by a secondary battery including a negative electrode material according to an embodiment. Examples of the power supply source may include a battery module, a battery pack, an energy storage system (ESS), and the like, but are not limited thereto.

The disclosure includes a device to which power is supplied by a power supply source equipped with a secondary battery including the negative electrode material according to an embodiment. Examples of such a device may include vehicles (hybrid vehicle, electric vehicle, etc.), portable electronic communication devices (wireless terminal, notebook computer, etc.), and the like, but are not limited thereto.

(Preparative Examples)

A raw material was prepared by introducing Si, $SiO_2$, and MgO powders into a powder mixer at a molar ratio of $6(Si):4.5(SiO_2):1.5(MgO)$, respectively and then homogeneously mixing the same.

After 26 kg of the raw material was placed in a crucible within a vacuum chamber at 0.1 Torr or less, the raw material was vaporized by heating at 1,400°C, and then condensed on a collection plate at 400°C, thereby obtaining a collected product (magnesium-doped silicon oxide).

The collected product thus obtained was heat-treated at 900°C for 15 hours in an Ar atmosphere to prepare a heat-treated product (bulk-type base material). Then, the prepared heat-treated product was pulverized and granulated ($D_{50} = 6.5\ \mu$m). Thereafter, the pulverized product was mixed with a liquid carbon precursor having a surface tension of 20 to 60 dyne/cm, followed by carbonization, thereby preparing a negative electrode material. Specifically, coal tar (specific gravity = 1.1-1.3 g/cc, a carbonization yield of about 25% upon carbonization at 900°C) in a liquid state at room temperature, which was produced during the dry distillation of coking coal in a steel mill, was used as the liquid carbon precursor. During the mixing, 100 parts by weight of the pulverized product, prepared by pulverization of the heat-treated product, was mixed with 12 parts by weight of the coal tar. For the carbonization, the mixture was placed in an alumina boat and heat-treated at 900°C for 120 minutes in a nitrogen atmosphere of 1 atm. Specifically, the mixture of the pulverized product and the coal tar was charged into the alumina boat, and the packing density of the mixture was adjusted by controlling the number of times of tapping to 10 to 300 times using a tapping machine (Quantachrome, Dual-tap). In Example 1, the packing density of the mixture of the pulverized product and the coal tar was 0.67 g/cc. In Example 2, the packing density of the mixture of the pulverized product and the coal tar was 0.58 g/cc. In Example 3, the packing density of the mixture of the pulverized product and the coal tar was 0.51 g/cc. In a comparative example, the packing density of the mixture of the pulverized product and the coal tar was 0.85 g/cc.

The properties of the negative electrode materials prepared in the examples, and the properties described in the detailed description and claims were obtained according to the "Analysis and Measurements" below.

(Analysis and Measurements)

$D_{50}$

After 0.01 g of a material to be analyzed was suspended in ethanol, the prepared suspension was sonicated for 1 minute. Then, the cumulative volume diameter distribution was measured by a conventional laser diffraction particle size distribution measuring device (Microtrac S3500). The median diameter $D_{50}$ of the material to be analyzed indicates the diameter at a position where the cumulative volume is 50% in the cumulative volume diameter distribution.

Sphericity

The sphericity was measured using an analyzer commonly used for particle shape analysis (Flowcam 8100, Fluid Imaging Technologies) after 0.01 g of the material to be analyzed was ultrasonically dispersed in 5 mL of ethanol. The sphericity of a material indicates the mean of the sphericity, and the mean of the sphericity is a statistical mean value obtained by securing the sphericity of each of at least 500, generally at least 1,000 particles and averaging the secured sphericity values.

Convexity

The convexity was measured using a particle shape analyzer (Morphologi 4, Malvern Panalytical) after 0.01 g of the material to be analyzed was ultrasonically dispersed in 5 mL of ethanol. The convexity (Con) of a material indicates the mean of the convexity values for individual particles, and the mean of convexity is a statistical mean obtained by securing the convexity value of each of at least 500, generally at least 1,000 particles and averaging the secured convexity values. The standard deviation of the convexity of a material and the proportion of particles (proportion based on the number of particles) having a convexity value of 0.9xCon or more in a material may be calculated by a conventional program provided as a data processing and analysis program in the particle shape analyzer, on the basis of the convexity data for each particle used for calculating the convexity (statistical mean) of the material.

The angularity ratio, the standard deviation of convexity, and the proportion of particles having a convexity within the range of convexity (Con) x 0.9 or more in each of the negative electrode materials prepared in the examples and comparative example were measured, and the results are summarized in Table 1 below.

(Table 1)

|  | Angularity ratio | Standard deviation of convexity | Proportion of particles having convexity within Conx0.9 or more |
|---|---|---|---|
| Example 1 | 0.806 | 0.021 | 95.7 |
| Example 2 | 0.503 | 0.007 | 98.0 |
| Example 3 | 0.301 | 0.011 | 97.8 |
| Comparative example | 1.215 | 0.023 | 94.8 |

As can be seen from the angularity ratios in Table 1, even when surface layers using the same carbon precursor are formed on particulate base materials having the same composition and structure, the angularity ratio of the prepared negative electrode material and the proportion (%) of particles having a convexity within the range of convexity (Con) x 0.9 or more were varied according to the packing density of the mixture of the particulate base material and the carbon precursor upon carbonization.

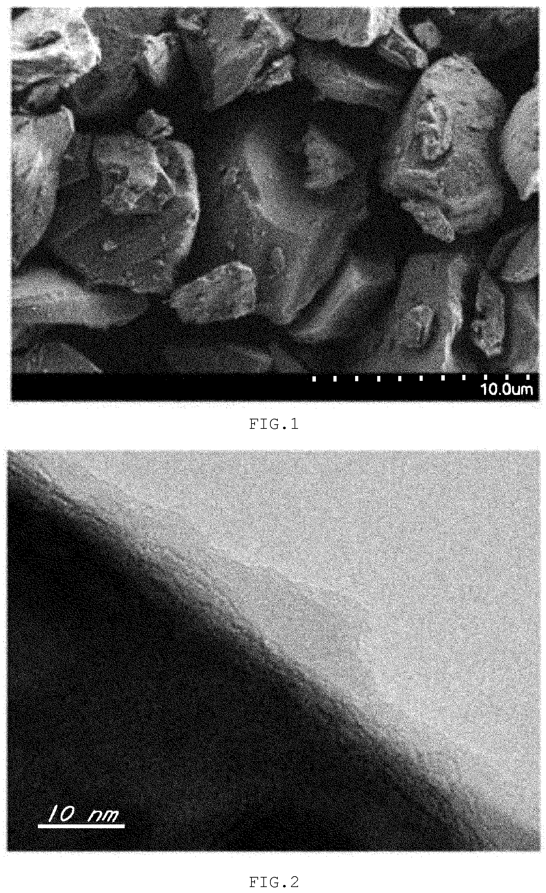

FIG. 1 is a scanning electron microscope (SEM) photograph showing the negative electrode material prepared in Example 3. The negative electrode materials prepared in Examples 1, 2, and 3 and the comparative example had substantially similar mean sizes ($D_{50}$), and the mean sizes ($D_{50}$) of the negative electrode materials prepared in Examples 1, 2, and 3 and the comparative example range from about 6.1 to 6.9 μm.

In addition, the negative electrode material is prepared by forming a surface layer on a pulverized product obtained by pulverization and granulation of a bulk material, and thus as seen in FIG. 1, the negative electrode material has an angular shape in which edges are present due to fractured surfaces by the pulverization.

The sphericities of the negative electrode materials prepared in Examples 1, 2, and 3 and the comparative example were also substantially similar to each other, as shown in the results with respect to $D_{50}$, and the sphericities of the negative electrode materials prepared in Examples 1, 2, and 3 and the comparative example range from about 0.8 to 0.9.

FIG. 2 is a transmission electron microscope image of an amorphous carbon layer coated on a base material in the negative electrode material prepared in Example 3. As shown in the transmission electron microscope observation results of FIG. 2, the surface of the base material was covered with amorphous carbon having a thickness of 4 to 30 nm.

An active material, a conductive material (carbon black), carboxymethyl cellulose (CMC), and styrene butadiene rubber (SBR) were mixed at a weight ratio of 8:1:0.5:0.5, wherein each of the negative electrode materials respectively prepared in the examples and comparative example was used as the active material. The mixture was coated on a copper foil having a thickness of 17 $\mu$m, followed by drying at 90°C for 40 minutes. After drying, a CR2032 coin-type half-cell was fabricated by punching the copper foil into 14 mm diameter circles, using metallic lithium with a diameter of 16 mm as a counter electrode, and injecting an electrolyte, with a separator having a diameter of 18 mm interposed therebetween. For the electrolyte, 1 M LiPF$_6$ was dissolved in a solvent in which ethylene carbonate (EC)/diethyl carbonate (DEC) were mixed at a volume ratio of 1:1, and 3 wt% of fluoroethylene carbonate (FEC) was used as an additive. A formation process was performed by subjecting the fabricated cell to charging (lithiation) to 0.005 V at a constant current of 0.1 C, constant voltage charging at 0.005 V until reaching 0.01 C, and then discharging (de-lithiation) to 1.5 V at a constant current of 0.1 C (first formation step), and thereafter charging (lithiation) to 0.005 V at a constant current of 0.1 C again, constant voltage charging at 0.005 V until reaching 0.01 C, and then discharging (de-lithiation) to 1.0 V at a constant current of 0.1 C (second formation step).

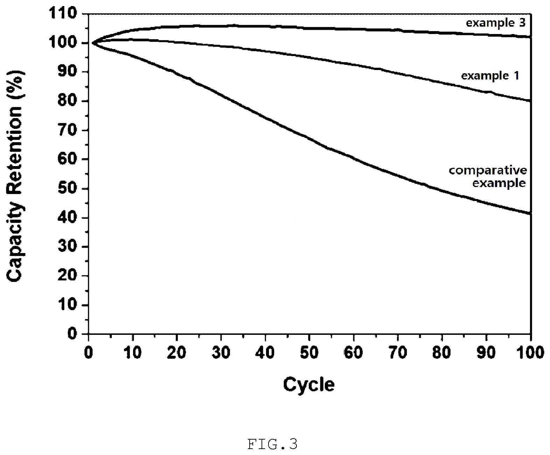

The half-cell undergoing the formation process was evaluated for charge/discharge cycle characteristics by charging (lithiation) to 0.005 V at a constant current of 0.5 C, constant voltage charging at 0.005 V until reaching 0.05 C, and then discharging (de-lithiation) to 1.0 V at a constant current of 0.5 C. The discharge capacity retention rate according to the charge/discharge cycle is shown in FIG. 3.

As can be seen from FIG. 3, the negative electrode materials prepared in the examples and comparative example include base materials having substantially the same composition and microstructure and substantially the same surface layer, but the discharge capacity retention rate was significantly changed depending on the specific morphology of a negative electrode material, and the negative electrode materials of Examples 1 to 3 having a small angularity ratio exhibited a significantly excellent discharge capacity retention rate.

The specified matters and limited embodiments and drawings such as specific elements in the disclosure have been disclosed for broader understanding of the disclosure, but the disclosure is not limited to the embodiments, and various modifications and changes are possible by those skilled in the art without departing from an essential characteristic of the disclosure.

Therefore, the spirit of the disclosure should not be limited to the described embodiments, and all changes and modifications that fall within metes and bounds of the claims, or equivalents of such metes and bounds are intended to be embraced by the range of the spirit of the present disclosure.

**Claims**

1. A negative electrode material for a secondary battery, which has a particulate form comprising, based on element components: a base material comprising silicon (Si); and a surface layer disposed on the base material and comprising carbon (C),

   wherein the negative electrode material has an angularity ratio (AR) of 1.00 or less, as calculated by Equation 1.

$$(\text{Equation } 1)$$

$$AR = \frac{(1-Con)}{Con} \times 100$$

   (In Equation 1, AR denotes the angularity ratio, and Con denotes the convexity obtained by dividing the convex perimeter of negative electrode material particles by the actual perimeter of the negative electrode particles.)

2. The negative electrode material of claim 1, wherein the angularity ratio is 0.55 or less.

3. The negative electrode material of claim 1, wherein the negative electrode material satisfies at least one of I) and II) below:

   I) the standard deviation value of the convexity $\leq 0.050$
   II) the proportion of particles having a convexity within the range of $0.9 \times Con$ or more being 90% or more.

4. The negative electrode material of claim 1, wherein the negative electrode material has a sphericity of 0.55 or more.

5. The negative electrode material of claim 1, wherein the negative electrode material has an angular shape.

6. The negative electrode material of claim 1, wherein the negative electrode material has a mean particle diameter ($D_{50}$) of 1 to 30 $\mu$m.

7. The negative electrode material of claim 1, wherein the surface layer comprises an amorphous carbon layer.

8. The negative electrode material of claim 7, wherein the surface layer has a thickness of 1 to 50 nm.

9. A negative electrode material for a secondary battery, which is a particulate silicon-based negative electrode, wherein the negative electrode material satisfies Equation 2 upon charge/discharge testing using a half-cell with a metallic lithium foil as a counter electrode under the following charge/discharge cycle conditions:

   charge/discharge cycle conditions: CC/CV, a cut-off voltage of 0.005 to 1.000 V, and a 0.5 C-rate.

$$(\text{Equation 2})$$
$$95\% < C_j/C_1*100$$

   (In Equation 2, $C_1$ denotes the discharge capacity (mAh/g) at the first charge/discharge cycle, and $C_j$ denotes the discharge capacity at the j-th charge/discharge cycle where j is an arbitrary natural number of 10 to 80.)

10. The negative electrode material of any one of claims 1 to 9, wherein the base material includes silicon, silicon oxide, silicon nitride, silicon sulfide, silicon carbide, a silicon alloy, a mixture thereof, or a composite thereof.

11. The negative electrode material of any one of claims 1 to 9, wherein the base material further contains at least one doping element (D) selected from the group of alkali metals, alkaline earth metals, and post-transition metals.

12. The negative electrode material of any one of claims 1 to 9, wherein the base material comprises, based on element components: a matrix containing silicon (Si), a dopant element (D), and oxygen (O); and silicon nanoparticles dispersed and incorporated in the matrix.

13. A negative electrode for a secondary battery, comprising the negative electrode material for a secondary battery of any one of claims 1 to 9.

FIG.1

FIG.2

FIG.3

## INTERNATIONAL SEARCH REPORT

| | |
|---|---|
| International application No. | |
| **PCT/KR2024/013807** | |

### A. CLASSIFICATION OF SUBJECT MATTER

**H01M 4/36**(2006.01)i; **H01M 4/38**(2006.01)i; **H01M 4/583**(2010.01)i; **H01M 4/134**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 10/052(2010.01); H01M 4/131(2010.01); H01M 4/1395(2010.01); H01M 4/38(2006.01); H01M 4/48(2010.01); H01M 4/58(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 음극재(anode material), 실리콘(silicon, Si), 탄소(carbon, C), 입자(particle), 굴곡도(convexity)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0101601 A (SAMSUNG SDI CO., LTD.) 19 August 2021 (2021-08-19)<br>See claims 1 and 14; and paragraphs [0023] and [0131]. | 1-13 |
| A | KR 10-2014-0012351 A (MK ELECTRON CO., LTD.) 03 February 2014 (2014-02-03)<br>See claims 1-13; paragraphs [0014] and [0031]; and table 2. | 1-13 |
| A | KR 10-2021-0077487 A (LG ENERGY SOLUTION, LTD.) 25 June 2021 (2021-06-25)<br>See claims 1-14. | 1-13 |
| A | US 2019-0312257 A1 (MITSUBISHI CHEMICAL CORPORATION) 10 October 2019 (2019-10-10)<br>See claims 1-10. | 1-13 |
| A | JP 6809449 B2 (NEC CORPORATION) 06 January 2021 (2021-01-06)<br>See claims 1-11. | 1-13 |

☐ Further documents are listed in the continuation of Box C.      ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 December 2024** | **19 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/013807** |

**Box No. III    Observations where unity of invention is lacking (Continuation of item 3 of first sheet)**

This International Searching Authority found multiple inventions in this international application, as follows:

1. The invention of group 1: claims 1-8, 10-12 and 13 (partial) pertain to a secondary battery anode material which is particulates that include a base material containing silicon (Si), and a surface layer that is located on the base material and that contains carbon (C), and which limits a bending ratio calculated through (formula 1) $AR = (1-Con)/Con \times 100$,

2. The invention of group 2: claims 9 and 13 (partial) pertain to a secondary battery anode material which is a particulate silicon-based anode material, and which satisfies (formula 2) $95\% < Cj/Cl*100$ in a charge/discharge test according to the charge/discharge cycle conditions (CC/CV, cut-off voltage 0.005 V to 1.000 V, 0.5 C-rate) by using a half-cell having a metal lithium foil as a counter electrode.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/KR2024/013807**

| Patent document cited in search report | | | Publication date (day/month/year) | Patent family member(s) | | | Publication date (day/month/year) |
|---|---|---|---|---|---|---|---|
| KR | 10-2021-0101601 | A | 19 August 2021 | EP | 3863083 | A1 | 11 August 2021 |
| | | | | US | 2021-0249648 | A1 | 12 August 2021 |
| KR | 10-2014-0012351 | A | 03 February 2014 | KR | 10-1430709 | B1 | 14 August 2014 |
| | | | | US | 2014-0023928 | A1 | 23 January 2014 |
| KR | 10-2021-0077487 | A | 25 June 2021 | CN | 114556620 | A | 27 May 2022 |
| | | | | EP | 4037012 | A1 | 03 August 2022 |
| | | | | EP | 4037012 | A4 | 08 November 2023 |
| | | | | JP | 2023-500542 | A | 06 January 2023 |
| | | | | JP | 2024-032863 | A | 12 March 2024 |
| | | | | US | 2022-0367864 | A1 | 17 November 2022 |
| | | | | WO | 2021-125825 | A1 | 24 June 2021 |
| US | 2019-0312257 | A1 | 10 October 2019 | CN | 109997257 | A | 09 July 2019 |
| | | | | CN | 109997257 | B | 12 December 2023 |
| | | | | CN | 115863618 | A | 28 March 2023 |
| | | | | JP | 7192499 | B2 | 20 December 2022 |
| | | | | KR | 10-2019-0085942 | A | 19 July 2019 |
| | | | | KR | 10-2449293 | B1 | 29 September 2022 |
| | | | | US | 11183679 | B2 | 23 November 2021 |
| | | | | WO | 2018-097213 | A1 | 31 May 2018 |
| JP | 6809449 | B2 | 06 January 2021 | WO | 2016-152718 | A1 | 29 September 2016 |

Form PCT/ISA/210 (patent family annex) (July 2022)